(19) Europäisches Patentamt
European Patent Office
Office européen des brevets

(11) EP 3 787 177 A1

# (12) EUROPEAN PATENT APPLICATION

(43) Date of publication:
**03.03.2021 Bulletin 2021/09**

(51) Int Cl.:
***H02N 1/04*** *(2006.01)*

(21) Application number: **19194543.5**

(22) Date of filing: **30.08.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **SABIC Global Technologies B.V.**
**4612 PX Bergen op Zoom (NL)**

(72) Inventors:
- **FARAH, Abdiaziz A.**
  **23955-6900 Thuwal (SA)**
- **ALSALEM, Fahad Khalid**
  **23955-6900 Thuwal (SA)**
- **FRESCAS, Jesús Alfonso Caraveo**
  **23955-6900 Thuwal (SA)**
- **AL-MAGHATHUWI, Ramzi Salem**
  **23955-6900 Thuwal (SA)**
- **JALAL, Taghreed A.**
  **23955-6900 Thuwal (SA)**

(74) Representative: **Elzaburu S.L.P.**
**Miguel Angel 21, 2nd floor**
**28010 Madrid (ES)**

## (54) NANOFIBER-BASED TRIBOELECTRIC ENERGY HARVESTING SYSTEM FOR WEARABLE ELECTRONICS

(57) An energy harvesting system including: an energy harvesting unit including a substrate, a conductive layer and a triboelectric active film layer including a plurality of polymer nanofibers; a voltage rectifier; and an energy storage unit. The plurality of polymer nanofibers include from 80 wt% to 99 wt% of a photoactive polycarbonate copolymer (XPC), and from 1 wt% to 20 wt% trifluoropropyl polyhedral oligomeric silsesquioxane (F-POSS).

EP 3 787 177 A1

## Description

### FIELD OF THE DISCLOSURE

The present disclosure relates to wearable energy harvesting systems, and in particular wearable energy harvesting systems incorporating triboelectric materials including polymer nanofibers.

### BACKGROUND OF THE DISCLOSURE

The ability to harvest renewable energy from the environment to seamlessly power wireless sensors and electronics is an important factor for the continued advancement of the Internet of Things. Many different technologies have been developed to convert mechanical into electrical energy, such as triboelectric, electromagnetic, and piezoelectric energy harvesters (EH). Other than triboelectric EH, each of these technologies require complicated structures, a high cost of operation, and heavy objects that require continuous motion. As a result, these energy sources are non-sustainable, inconvenient and impractical for use in wearable electronics and for sensors.

With the increasing potential of electronic textiles, the desire to generate energy directly from conventional fabrics has prompted increased research in the field of energy harvesters based on wearable textiles. The current challenge facing the broader adoption of electronic textiles remains the need to obtain a combination of high output performance, functionalization, and wearing comfort.

The realization of miniaturized triboelectric energy harvesters called triboelectric nanogenerators (TENG) has sparked a focus on triboelectric energy harvesters in terms of power output optimization, contact geometry modification, and sustainable energy sources. Various energy harvester architectures have been enabled to harvest mechanical energy from motion such as a human walking, the rotation of a wheel or tire, shock events, vibration, and the bending or deformation of a material. A variety of mechanical energy-harvesting technologies have also been comprehensively studied and reported in the literature as well, including piezoelectric, electromagnetic, electrostatic, and triboelectric. Piezoelectric energy harvesting depends on a material's ability to produce charge (or voltage) when mechanically stressed. For all these technologies, limited choices of materials and complex fabrication techniques remain major challenges for them to be integrated into current emerging technologies notably in wearable electronic textile devices.

These and other shortcomings are addressed by aspects of the disclosure.

### SUMMARY

Aspects of the disclosure relate to an energy harvesting system including: an energy harvesting unit including a substrate, a conductive layer and a triboelectric active film layer including a plurality of polymer nanofibers; a voltage rectifier; and an energy storage unit. The plurality of polymer nanofibers include from 80 wt% to 99 wt% of a photoactive polycarbonate copolymer (XPC), and from 1 wt% to 20 wt% trifluoropropyl polyhedral oligomeric silsesquioxane (F-POSS).

### BRIEF DESCRIPTION OF THE FIGURES

In the drawings, which are not necessarily drawn to scale, like numerals may describe similar components in different views. Like numerals having different letter suffixes may represent different instances of similar components. The drawings illustrate generally, by way of example, but not by way of limitation, various embodiments discussed in the present document.

FIG. 1 is a block diagram of an energy harvesting system according to aspects of the disclosure.
FIG. 2 is a schematic diagram of a triboelectric sensor formed according to aspects of the disclosure.
FIG. 3 is a detailed schematic diagram of a triboelectric sensor and energy harvesting unit with circuit elements according to aspects of the disclosure.
FIGS. 4A and 4B are scanning electron microscopy (SEM) images of polymer nanofibers formed according to aspects of the disclosure.
FIG. 4C is an optical image of electrospun nanofibers formed according to aspects of the disclosure.
FIGS. 5A and 5B are graphs showing voltage properties of an energy harvesting system formed according to aspects of the disclosure.
FIGS. 6A and 6B are graphs showing electrical output performance of an energy harvesting system formed according to aspects of the disclosure.
FIG. 7 is a graph showing energy storage performance of an energy harvesting system formed according to aspects of the disclosure.

## DETAILED DESCRIPTION

Aspects of the disclosure relate to a mechanically flexible nanofiber-based triboelectric-energy-harvesting (EH) device. In certain aspects the device includes an electro-spun XPC-F-POSS thermoplastic copolymer blend. The triboelectric driven energy-harvesting device formed from the nanofibers demonstrates exceptionally high-energy harvesting performance in touch-and-release mode in addition to additional benefits associated with a fiber-based material, such as but not limited to absorbency, softness, breathability, flexibility, appearance and good air permeability. The nanofiber-based device provides a viable source of power for portable electronic wearables and allows for the generation of electronic textiles on a large scale. Furthermore, it can potentially be custom embedded the required electrical and circuitry components in any desired size and shape. Notably, an EH device including the nanofibers provides energy-generating capability from body gestures. In addition, the unique integration of a high performing EH unit with a circuit that can be fabricated on a flexible substrate using thin film techniques makes the functional nanofibers more adaptable, compact and convenient as compared to conventional technologies for wearable electronics and sensors.

The present disclosure can be understood more readily by reference to the following detailed description of the disclosure and the Examples included therein. In particular aspects, the present disclosure pertains to an energy harvesting system including: an energy harvesting unit including a substrate, a conductive layer and a triboelectric active film layer including a plurality of polymer nanofibers; a voltage rectifier; and an energy storage unit. The plurality of polymer nanofibers include from 80 wt% to 99 wt% of a photoactive polycarbonate copolymer (XPC), and from 1 wt% to 20 wt% trifluoropropyl polyhedral oligomeric silsesquioxane (F-POSS).

Before the present compounds, compositions, articles, systems, devices, and/or methods are disclosed and described, it is to be understood that they are not limited to specific synthetic methods unless otherwise specified, or to particular reagents unless otherwise specified, as such can, of course, vary. It is also to be understood that the terminology used herein is for the purpose of describing particular aspects only and is not intended to be limiting.

Various combinations of elements of this disclosure are encompassed by this disclosure, e.g., combinations of elements from dependent claims that depend upon the same independent claim.

Moreover, it is to be understood that unless otherwise expressly stated, it is in no way intended that any method set forth herein be construed as requiring that its steps be performed in a specific order. Accordingly, where a method claim does not actually recite an order to be followed by its steps or it is not otherwise specifically stated in the claims or descriptions that the steps are to be limited to a specific order, it is in no way intended that an order be inferred, in any respect. This holds for any possible non-express basis for interpretation, including: matters of logic with respect to arrangement of steps or operational flow; plain meaning derived from grammatical organization or punctuation; and the number or type of embodiments described in the specification.

All publications mentioned herein are incorporated herein by reference to disclose and describe the methods and/or materials in connection with which the publications are cited.

### Definitions

It is also to be understood that the terminology used herein is for the purpose of describing particular aspects only and is not intended to be limiting. As used in the specification and in the claims, the term "comprising" can include the embodiments "consisting of' and "consisting essentially of." Unless defined otherwise, all technical and scientific terms used herein have the same meaning as commonly understood by one of ordinary skill in the art to which this disclosure belongs. In this specification and in the claims which follow, reference will be made to a number of terms which shall be defined herein.

As used in the specification and the appended claims, the singular forms "a," "an" and "the" include plural referents unless the context clearly dictates otherwise. Thus, for example, reference to "a polycarbonate copolymer" includes mixtures of two or more polycarbonate copolymers.

As used herein, the term "combination" is inclusive of blends, mixtures, alloys, reaction products, and the like.

Ranges can be expressed herein as from one value (first value) to another value (second value). When such a range is expressed, the range includes in some aspects one or both of the first value and the second value. Similarly, when values are expressed as approximations, by use of the antecedent 'about,' it will be understood that the particular value forms another aspect. It will be further understood that the endpoints of each of the ranges are significant both in relation to the other endpoint, and independently of the other endpoint. It is also understood that there are a number of values disclosed herein, and that each value is also herein disclosed as "about" that particular value in addition to the value itself. For example, if the value "10" is disclosed, then "about 10" is also disclosed. It is also understood that each unit between two particular units are also disclosed. For example, if 10 and 15 are disclosed, then 11, 12, 13, and 14 are also disclosed.

As used herein, the terms "about" and "at or about" mean that the amount or value in question can be the designated value, approximately the designated value, or about the same as the designated value. It is generally understood, as used herein, that it is the nominal value indicated ±10% variation unless otherwise indicated or inferred. The term is intended to convey that similar values promote equivalent results or effects recited in the claims. That is, it is understood that amounts, sizes, formulations, parameters, and other quantities and characteristics are not and need not be exact, but can be approximate and/or larger or smaller, as desired, reflecting tolerances, conversion factors, rounding off, measurement error and the like, and other factors known to those of skill in the art. In general, an amount, size, formulation, parameter or other quantity or characteristic is "about" or "approximate" whether or not expressly stated to be such. It is understood that where "about" is used before a quantitative value, the parameter also includes the specific quantitative value itself, unless specifically stated otherwise.

Disclosed are the components to be used to prepare the compositions of the disclosure as well as the compositions themselves to be used within the methods disclosed herein. These and other materials are disclosed herein, and it is understood that when combinations, subsets, interactions, groups, etc. of these materials are disclosed that while specific reference of each various individual and collective combinations and permutation of these compounds cannot be explicitly disclosed, each is specifically contemplated and described herein. For example, if a particular compound is disclosed and discussed and a number of modifications that can be made to a number of molecules including the compounds are discussed, specifically contemplated is each and every combination and permutation of the compound and the modifications that are possible unless specifically indicated to the contrary. Thus, if a class of molecules A, B, and C are disclosed as well as a class of molecules D, E, and F and an example of a combination molecule, A-D is disclosed, then even if each is not individually recited each is individually and collectively contemplated meaning combinations, A-E, A-F, B-D, B-E, B-F, C-D, C-E, and C-F are considered disclosed. Likewise, any subset or combination of these is also disclosed. Thus, for example, the sub-group of A-E, B-F, and C-E would be considered disclosed. This concept applies to all aspects of this application including, but not limited to, steps in methods of making and using the compositions of the disclosure. Thus, if there are a variety of additional steps that can be performed it is understood that each of these additional steps can be performed with any specific aspect or combination of aspects of the methods of the disclosure.

References in the specification and concluding claims to parts by weight of a particular element or component in a composition or article, denotes the weight relationship between the element or component and any other elements or components in the composition or article for which a part by weight is expressed. Thus, in a compound containing 2 parts by weight of component X and 5 parts by weight component Y, X and Y are present at a weight ratio of 2:5, and are present in such ratio regardless of whether additional components are contained in the compound.

A weight percent of a component, unless specifically stated to the contrary, is based on the total weight of the formulation or composition in which the component is included.

As used herein, the terms "number average molecular weight" or "Mn" can be used interchangeably, and refer to the statistical average molecular weight of all the polymer chains in the sample and is defined by the formula:

$$M_n = \frac{\sum N_i M_i}{\sum N_i},$$

where Mi is the molecular weight of a chain and Ni is the number of chains of that molecular weight. Mn can be determined for polymers, e.g., polycarbonate polymers, by methods well known to a person having ordinary skill in the art using molecular weight standards, e.g. polycarbonate standards or polystyrene standards, preferably certified or traceable molecular weight standards.

The terms "BisA," "BPA," or "bisphenol A," which can be used interchangeably, as used herein refers to a compound having a structure represented by the formula:

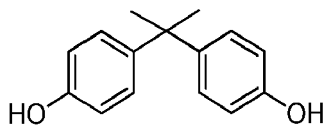

BisA can also be referred to by the name 4,4'-(propane-2,2-diyl)diphenol; p,p'-isopropylidenebisphenol; or 2,2-bis(4-hydroxyphenyl)propane. BisA has the CAS # 80-05-7.

As used herein, "polycarbonate" refers to an oligomer or polymer comprising residues of one or more dihydroxy compounds, e.g., dihydroxy aromatic compounds, joined by carbonate linkages; it also encompasses homopolycarbonates, copolycarbonates, and (co)polyester carbonates.

As used herein the terms "weight percent," "wt%," and "wt. %," which can be used interchangeably, indicate the percent by weight of a given component based on the total weight of the composition, unless otherwise specified.

That is, unless otherwise specified, all wt% values are based on the total weight of the composition. It should be understood that the sum of wt% values for all components in a disclosed composition or formulation are equal to 100.

Unless otherwise stated to the contrary herein, all test standards are the most recent standard in effect at the time of filing this application.

Each of the materials disclosed herein are either commercially available and/or the methods for the production thereof are known to those of skill in the art.

It is understood that the compositions disclosed herein have certain functions. Disclosed herein are certain structural requirements for performing the disclosed functions and it is understood that there are a variety of structures that can perform the same function that are related to the disclosed structures, and that these structures will typically achieve the same result.

In the present disclosure a nanofiber-based triboelectric energy harvesting (EH) system is described that can generate enough energy to power electronic circuits without the need for any external power supplies. A general block diagram of the energy harvesting (EH) system is shown in FIG. 1. The first block represents the triboelectric sensor in which the energy is harvested. The unit includes at least three layers and a resistor as shown in FIG. 2. The first layer is the substrate that provides the mechanical support to the rest of the system. The substrate can be flexible or rigid depending on the application. An electrode layer receives accumulated charges and is a conductive material. An electronegative triboelectric layer contacts the electrode layer. When an electropositive material - such as a finger, skin, or other material comes in contact with the active layer, the difference in electron-affinity forces charges to flow to the electrode and then to the resistor, creating a voltage drop across the resistor according to Equation 1:

$$V = IR \qquad (1)$$

Where,

I: electric current measured in Ampere (A)
R: Resistance of the resistor measured in Ohms ($\Omega$)
V: Voltage or electrical potential difference measured in Volts (V)

A more detailed schematic of exemplary components of an EH system is illustrated in FIG. 3. In some aspects voltage generated by triboelectric sensor is provided to a full-wave bridge rectifier circuit. The full-wave bridge rectifier eliminates negative cycles of the output voltage and makes it continuous through time, converting it to a DC voltage. The DC voltage is applied across a capacitor of a given value, starting the charging process of the capacitor. When the capacitor becomes fully charged, a switch is flipped to start the discharging process, allowing the energy stored by the capacitor to power the driving circuit/load.

Aspects of the disclosure thus relate to an energy harvesting system including: an energy harvesting unit including a substrate, a conductive layer and a triboelectric active film layer including a plurality of polymer nanofibers; a voltage rectifier; and an energy storage unit. The plurality of polymer nanofibers include from 80 wt% to 99 wt% of a photoactive polycarbonate copolymer (XPC), and from 1 wt% to 20 wt% trifluoropropyl polyhedral oligomeric silsesquioxane (F-POSS).

In some aspects the voltage rectifier is a full wave bridge rectifier.

The energy storage unit is a capacitor in certain aspects.

XPC is a photoactive cross-linkable polycarbonate resin that includes 0.5 mole % to 5 mole % endcap groups derived from monohydroxybenzophenone, including from 1 mole % to 4.5 mole, or from 1.7 mole % to 4.5 mole %, or from 2 mole % to 4.5 mole %, or from 2.5 mole % to 4.5 mole %, or from 3.5 mole % to 4.5 mole % endcap groups derived from the monohydroxybenzophenone. Most desirably, the monohydroxybenzophenone is 4-hydroxybenzophenone. In a particular aspect the resin includes 3.5 mole % endcap groups derived from 4-hydroxybenzophenone, as shown in formula (2) below:

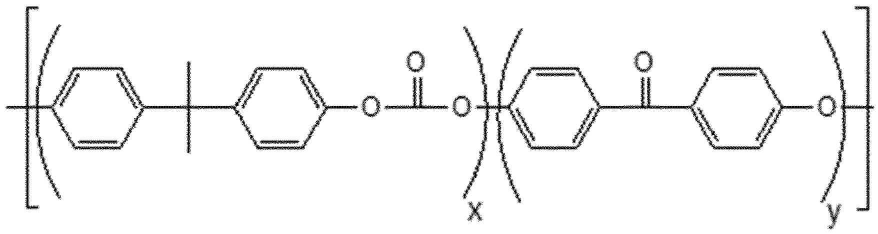

y = 3.5% (2)

XPC may be formed in accordance with the methods described in U.S. Patent Publication No. 2017/0247507, the disclosure of which is incorporated herein by this reference in its entirety. In one aspect the XPC is derived from bisphenol-A polycarbonate and includes 3.5 mole % benzophenone moieties.

F-POSS is trifluoropropyl polyhedral oligomeric silsesquioxane, and has the chemical structure shown in formula (3):

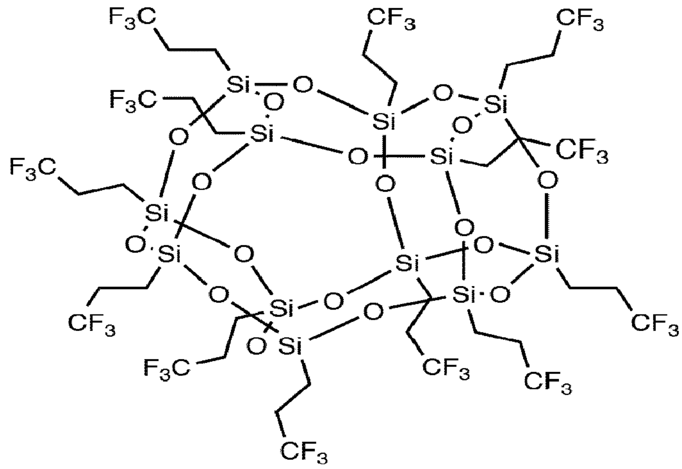

(3)

In some aspects the nanofiber includes from 80 wt% to 90 wt% XPC and from 10 wt% to 20 wt% F-POSS. In further aspects the polymer nanofiber includes 85 wt% XPC and 15 wt% F-POSS.

The substrate may be flexible or rigid and may include, but is not limited to, a polymer, a metal, a glass, or a combination thereof. In certain aspects the polymer polymer includes, but is not limited to, poly(methyl methacrylate) (PMMA), silicon, polyethylene naphthalate (PEN), polyethylene terephthalate (PET), polyetherimide (PEI), polycarbonate (PC), polyimide (PI), polyetherimide (PEI), copolymers thereof, and combinations thereof.

The conductive layer may include, but is not limited to tin oxide, cadmium oxide, indium oxide, zinc oxide, magnesium oxide, indium tin oxide (ITO), gold, silver, or a combination thereof.

In one aspect the polymer nanofibers are formed by an electrospinning process. Electrospinning is a conventional process known for making a large volume of continuous nanofibers. A more detailed description of an exemplary electrospinning process is provided in the Examples below. Aspects of the disclosure thus relate to methods of making the polymer nanofibers including: combining the XPC and F-POSS in a solvent; allowing the XPC and F-POSS to dissolve in the solvent to form a solution; and electrospinning the solution to form the polymer nanofibers.

In some aspects the solvent includes from 40 wt% to 60 wt% dimethylformamide (DMF) and from 40 wt% to 60 wt% tetrahydrofuran (THF). In a particular aspect the solvent includes 50 wt% DMF and 50 wt% THF.

The polymer nanofibers have a diameter of up to 1000 nanometers in some aspects; in further aspects the polymer nanofibers have a diameter of up to 100 nanometers.

The polymer nanofibers may be formed into a yarn (e.g., a spun yarn or a filament yarn) in some aspects. In other aspects the polymer nanofibers are formed directly into a sheet or into the form of a fabric. For example, as shown in FIG. 4B, the electrospun nanofibers are in the form of a sheet which resembles a nonwoven fabric. In further aspects the nanofibers are in the form of a woven fabric or a knit fabric.

The triboelectric sensor including the XPC-F-POSS polymer nanofibers and the energy harvesting unit including

the triboelectric sensor include numerous features such as, but not limited to:

- All nanofiber triboelectric-driven energy harvester
- Electronic textile with characteristic fabric properties (absorbance, stretchability, breathability)
- Integration of all thin-film devices including energy-harvesting unit, rectifier circuit, and capacitor, which in turn enhances the form factor by adding flexibility, bendability, and transparency
- The use of the triboelectric material XPC-F-POSS with rectifier circuit and a capacitor in an energy harvesting system
- All thin film rectifier
- Integration of triboelectric-based touch sensor with triboelectric-based energy harvester
- Continuous DC voltage through direct contact with human skin
- Self-powered skin patch
- High performance compared to the conventional triboelectric-based energy harvesters
- Simple EH device with low cost of production and processing
- Coupling of contact charging and electrostatic induction with a seamlessly self-powered EH device

The energy harvesting system described herein may be incorporated into numerous articles. Example articles include, but are not limited to, a fabric, article of clothing, a dermal patch, an automotive component, a mobile telecommunications device, a personal electronics device, a healthcare device, a wellness device, and a keyboard. In a specific example of an automotive component, the energy harvesting system could be incorporated into a steering wheel to generate energy while the user is driving. In specific examples of a personal electronics device, the energy harvesting system could be incorporated into a mobile phone, a smart watch or a sports electronics device (e.g. an activity tracker).

Various combinations of elements of this disclosure are encompassed by this disclosure, e.g., combinations of elements from dependent claims that depend upon the same independent claim.

## Aspects of the Disclosure

In various aspects, the present disclosure pertains to and includes at least the following aspects.

Aspect 1. An energy harvesting system comprising:

an energy harvesting unit comprising a substrate, a conductive layer and a triboelectric active film layer comprising a plurality of polymer nanofibers;
a voltage rectifier; and
an energy storage unit,
wherein the plurality of polymer nanofibers comprise from 80 wt% to 99 wt% of a photoactive polycarbonate copolymer (XPC), and from 1 wt% to 20 wt% trifluoropropyl polyhedral oligomeric silsesquioxane (F-POSS).

Aspect 2. The energy harvesting system according to claim 1, wherein the voltage rectifier is a full wave bridge rectifier.

Aspect 3. The energy harvesting system according to claim 1 or 2, wherein the energy storage unit is a capacitor.

Aspect 4. The energy harvesting system according to any of claims 1 to 3, wherein the plurality of polymer nanofibers comprise from 80 wt% to 90 wt% XPC and from 10 wt% to 20 wt% F-POSS.

Aspect 5. The energy harvesting system according to any of claims 1 to 4, wherein the XPC is derived from bisphenol-A polycarbonate and comprises from 3.0 mole % to 4.0 mole % benzophenone moieties.

Aspect 6. The energy harvesting system according to any of claims 1 to 5, wherein the substrate comprises a polymer, a metal, a glass, or a combination thereof.

Aspect 7. The energy harvesting system according to claim 6, wherein the polymer comprises poly(methyl methacrylate) (PMMA), silicon, polyethylene naphthalate (PEN), polyethylene terephthalate (PET), polyetherimide (PEI), polycarbonate (PC), polyimide (PI), polyetherimide (PEI), copolymers thereof, and combinations thereof.

Aspect 8. The energy harvesting system according to any of claims 1 to 7, wherein the conductive layer comprises tin oxide, cadmium oxide, indium oxide, zinc oxide, magnesium oxide, indium tin oxide (ITO), gold, silver, or a combination thereof.

Aspect 9. The energy harvesting system according to any of claims 1 to 8, wherein the plurality of polymer nanofibers are formed by a process comprising the steps of:

combining the XPC and F-POSS in a solvent;
allowing the XPC and F-POSS to dissolve in the solvent to form a solution; and
electrospinning the solution to form the polymer nanofibers.

Aspect 10. The energy harvesting system according to claim 9, wherein the solvent comprises from 40 wt% to 60 wt% dimethylformamide (DMF) and from 40 wt% to 60 wt% tetrahydrofuran (THF)

Aspect 11. The energy harvesting system according to claim 10, wherein the solvent comprises 50 wt% DMF and 50 wt% THF.

Aspect 12. The energy harvesting system according to any of claims 1 to 8, wherein the polymer nanofibers are in a form of a yarn.

Aspect 13. The energy harvesting system according claim 12, wherein the yarn is in the form of a fabric.

Aspect 14. The energy harvesting system according to any of claims 1 to 8, wherein the polymer nanofibers are in the form of a fabric, wherein the fabric is a woven fabric, a knit fabric or a nonwoven fabric.

Aspect 15. An article comprising the energy harvesting system according to any of claims 1 to 14.

Aspect 16. The article according to claim 15, wherein the article is a fabric, an article of clothing, a dermal patch, an automotive component, a mobile telecommunications device, a personal electronics device, a healthcare device, a wellness device, or a keyboard.

## EXAMPLES

The following examples are put forth so as to provide those of ordinary skill in the art with a complete disclosure and description of how the compounds, compositions, articles, devices and/or methods claimed herein are made and evaluated, and are intended to be purely exemplary and are not intended to limit the disclosure. Efforts have been made to ensure accuracy with respect to numbers (e.g., amounts, temperature, etc.), but some errors and deviations should be accounted for. Unless indicated otherwise, parts are parts by weight, temperature is in °C or is at ambient temperature, and pressure is at or near atmospheric. Unless indicated otherwise, percentages referring to composition are in terms of wt%.

There are numerous variations and combinations of reaction conditions, e.g., component concentrations, desired solvents, solvent mixtures, temperatures, pressures and other reaction ranges and conditions that can be used to optimize the product purity and yield obtained from the described process. Only reasonable and routine experimentation will be required to optimize such process conditions.

### Nanofiber preparation

Electrospinning is a versatile process to produce submicron polymer fibers having a high surface-to-volume ratio. Long intertwined nanofibers were fabricated from photoactive polycarbonate copolymer (XPC) and perfluoropropyl polyhedral oligomeric silsesquioxane (F-POSS) formulation (15 wt% F-POSS and 85 wt% XPC) using an electrospinning process. The F-POSS molecules were attached to the photoactive polycarbonate copolymer matrix. This approach is based on conventional photochemical processes occurring in benzophenone-polycarbonate copolymer surfaces, which leads to concurrent encapsulating, crosslinking and locking in the physio-sorbed F-POSS molecules onto photoactive nanofibers. The photoactive substrate is a copolymer of polycarbonate thermoplastics containing (3.5%) of benzophenone moieties. Benzophenone is a well-known photoactive material because of its ability to form a covalent C-C bond via C-H groups in a wide range of chemical environments. The XPC matrix and the F-POSS molecules in the form of pellets/solid were dissolved at 40 degrees Celsius (°C) for 5 hours (hrs) in a (50:50 volume/volume percent (v/v)) mixture of tetrahydrofuran (THF) and dimethylformamide (DMF) to prepare a transparent and viscous 20% weight per volume (w/v) solution. The solution was then loaded into a 5 milliliter (mL) plastic syringe with a 21 gauge (G) steel needle.

The electrospinning was carried out using an MECC NANNON electrospinning setup under the following conditions: Voltage (20 kilovolt (KV)), spinning distance (15 centimeter (cm)), flow rate (0.5 milliliter per hour (mL/h)). The resulting nanofibers were collected on a planar collector covered with aluminum foil.. The surface morphology of the fibers was observed using a scanning electron microscopy (SEM) (Fei quanta 600). Scanning electron microscopy images of the fibers formed are shown in FIG. 4A and in FIG. 4B (enlarged). An optical image (photograph) of the electrospun XPC-F-POSS nanofibers is shown in FIG. 4C.

Standard polycarbonate polymers have excellent impact resistance and lower density than glass but also show lower abrasion, chemical, and UV resistance compared to many other polymeric materials. In contrast to standard polycarbonate polymers, the XPC nanofibers described herein have high chemical and thermal stability. In addition, they can be covalently attached to a wide variety of different functional moieties through the benzophone chemsitry available in the XPC copolymer. This functionality also facilitates a strong encapsulation of F-POSS into the reactive XPC support matrix. Realization of the robust F-POSS encapsulation onto the photoactive nanofiber surface is advantageous not only to prevent desorption of F-POSS from the polymer matrix but also as a platform for a high performing triboelectric sensor and energy harvesting (EH) device.

## Energy harvester (EH) device fabrication and testing

The XPC-F-POSS triboelectric nanofiber material has demonstrated the ability to harvest energy through direct contact with the human skin, which can then be stored and used to control a utility load. When enough energy has been stored in the capacitor, a mechanical or electrical switch can then be used to discharge that energy to turn on the transmitter circuit and send a digital signal to a receiver to turn ON/OFF a utility load (as described above in FIG. 3). When human skin is in contact with the triboelectric layer including the XPC-F-POSS nanofiber, an output voltage exceeding 21 V in touch-and-hold mode after the rectifier circuit is measured across the full-wave bridge rectifier as illustrated in FIG. 5A. The output voltage per unit area is shown in FIG. 5B, in which each square centimeter of XPC-F-POSS nanofiber was able to generate voltage up to 1.2 V. As a result, the triboelectric sensor according to aspects of the disclosure is suitable for large-area application segments.

During the charging phase, the continuous triboelectric voltage is passed to a capacitor of a given capacitance value to gradually store that voltage or energy. When the required voltage value is reached, a mechanical switch is used to consume the stored energy to power the transmitter module and send a signal to the receiver to control a load. An output voltage of 21 V was generated before it is consumed to power the transmitter and concomitant communication with a receiver to a load (i.e., turning ON/OFF a light bulb or feeding energy to a sensor) as shown in FIG. 1. Characteristic device out parameters are displayed in FIGS. 6A, 6B and 7. The device was able to generate an output voltage of 16. 6 volts (V), accumulated charges on the capacitor of 16 microcoulombs ($\mu$C), and a total stored energy in the capacitor of approximately 135 microjoule ($\mu$J), all in a 30 second (s) time period.

From the results it is concluded that a photoactive polycarbonate copolymer (XPC) matrix material blended with perfluoropropyl polyhedral oligomeric silsesquioxane (F-POSS) nanofibers can function as a high performing triboelectric-based energy harvesting (EH) system. Not only does the triboelectric-based EH system feature a simple fabrication process, large electric output, excellent robustness and extremely low cost of production, but it also extends its utility to seamless self-powered wearable energy harvesters beyond conventional electronic textile technologies.

Method examples described herein can be machine or computer-implemented at least in part. Some examples can include a computer-readable medium or machine-readable medium encoded with instructions operable to configure an electronic device to perform methods as described in the above examples. An implementation of such methods can include code, such as microcode, assembly language code, a higher-level language code, or the like. Such code can include computer readable instructions for performing various methods. The code may form portions of computer program products. Further, in an example, the code can be tangibly stored on one or more volatile, non-transitory, or non-volatile tangible computer-readable media, such as during execution or at other times. Examples of these tangible computer-readable media can include, but are not limited to, hard disks, removable magnetic disks, removable optical disks (e.g., compact disks and digital video disks), magnetic cassettes, memory cards or sticks, random access memories (RAMs), read only memories (ROMs), and the like.

The above description is intended to be illustrative, and not restrictive. For example, the above-described examples (or one or more aspects thereof) may be used in combination with each other. Other embodiments can be used, such as by one of ordinary skill in the art upon reviewing the above description. The Abstract is provided to comply with 37 C.F.R. § 1.72(b), to allow the reader to quickly ascertain the nature of the technical disclosure. It is submitted with the understanding that it will not be used to interpret or limit the scope or meaning of the claims. Also, in the above Detailed Description, various features may be grouped together to streamline the disclosure. This should not be interpreted as intending that an unclaimed disclosed feature is essential to any claim. Rather, inventive subject matter may lie in less than all features of a particular disclosed embodiment. Thus, the following claims are hereby incorporated into the Detailed Description as examples or embodiments, with each claim standing on its own as a separate embodiment, and it is contemplated that such embodiments can be combined with each other in various combinations or permutations. The scope of the invention should be determined with reference to the appended claims, along with the full scope of equivalents to which such claims are entitled.

## Claims

**1.** An energy harvesting system comprising:

an energy harvesting unit comprising a substrate, a conductive layer and a triboelectric active film layer comprising a plurality of polymer nanofibers;
a voltage rectifier; and
an energy storage unit,
wherein the plurality of polymer nanofibers comprise from 80 wt% to 99 wt% of a photoactive polycarbonate copolymer (XPC), and from 1 wt% to 20 wt% trifluoropropyl polyhedral oligomeric silsesquioxane (F-POSS).

2. The energy harvesting system according to claim 1, wherein the voltage rectifier is a full wave bridge rectifier.

3. The energy harvesting system according to claim 1 or 2, wherein the energy storage unit is a capacitor.

4. The energy harvesting system according to any of claims 1 to 3, wherein the plurality of polymer nanofibers comprise from 80 wt% to 90 wt% XPC and from 10 wt% to 20 wt % F-POSS.

5. The energy harvesting system according to any of claims 1 to 4, wherein the XPC is derived from bisphenol-A polycarbonate and comprises from 3.0 mole % to 4.0 mole % benzophenone moieties.

6. The energy harvesting system according to any of claims 1 to 5, wherein the substrate comprises a polymer, a metal, a glass, or a combination thereof.

7. The energy harvesting system according to claim 6, wherein the polymer comprises poly(methyl methacrylate) (PMMA), silicon, polyethylene naphthalate (PEN), polyethylene terephthalate (PET), polyetherimide (PEI), polycarbonate (PC), polyimide (PI), polyetherimide (PEI), copolymers thereof, and combinations thereof.

8. The energy harvesting system according to any of claims 1 to 7, wherein the conductive layer comprises tin oxide, cadmium oxide, indium oxide, zinc oxide, magnesium oxide, indium tin oxide (ITO), gold, silver, or a combination thereof.

9. The energy harvesting system according to any of claims 1 to 8, wherein the plurality of polymer nanofibers are formed by a process comprising the steps of:

combining the XPC and F-POSS in a solvent;
allowing the XPC and F-POSS to dissolve in the solvent to form a solution; and
electrospinning the solution to form the polymer nanofibers.

10. The energy harvesting system according to claim 9, wherein the solvent comprises from 40 wt% to 60 wt% dimethylformamide (DMF) and from 40 wt% to 60 wt% tetrahydrofuran (THF)

11. The energy harvesting system according to claim 10, wherein the solvent comprises 50 wt% DMF and 50 wt% THF.

12. The energy harvesting system according to any of claims 1 to 8, wherein the polymer nanofibers are in a form of a yarn.

13. The energy harvesting system according claim 12, wherein the yarn is in the form of a fabric.

14. The energy harvesting system according to any of claims 1 to 8, wherein the polymer nanofibers are in the form of a fabric, wherein the fabric is a woven fabric, a knit fabric or a nonwoven fabric.

15. An article comprising the energy harvesting system according to any of claims 1 to 14, wherein the article is a fabric, an article of clothing, a dermal patch, an automotive component, a mobile telecommunications device, a personal electronics device, a healthcare device, a wellness device, or a keyboard.

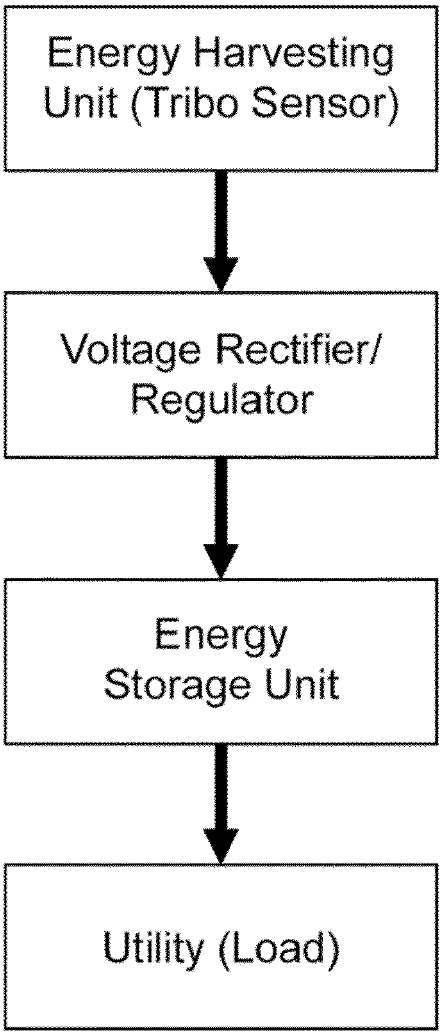
Energy Harvesting Unit (Tribo Sensor)
Voltage Rectifier/ Regulator
Energy Storage Unit
Utility (Load)

FIG. 1

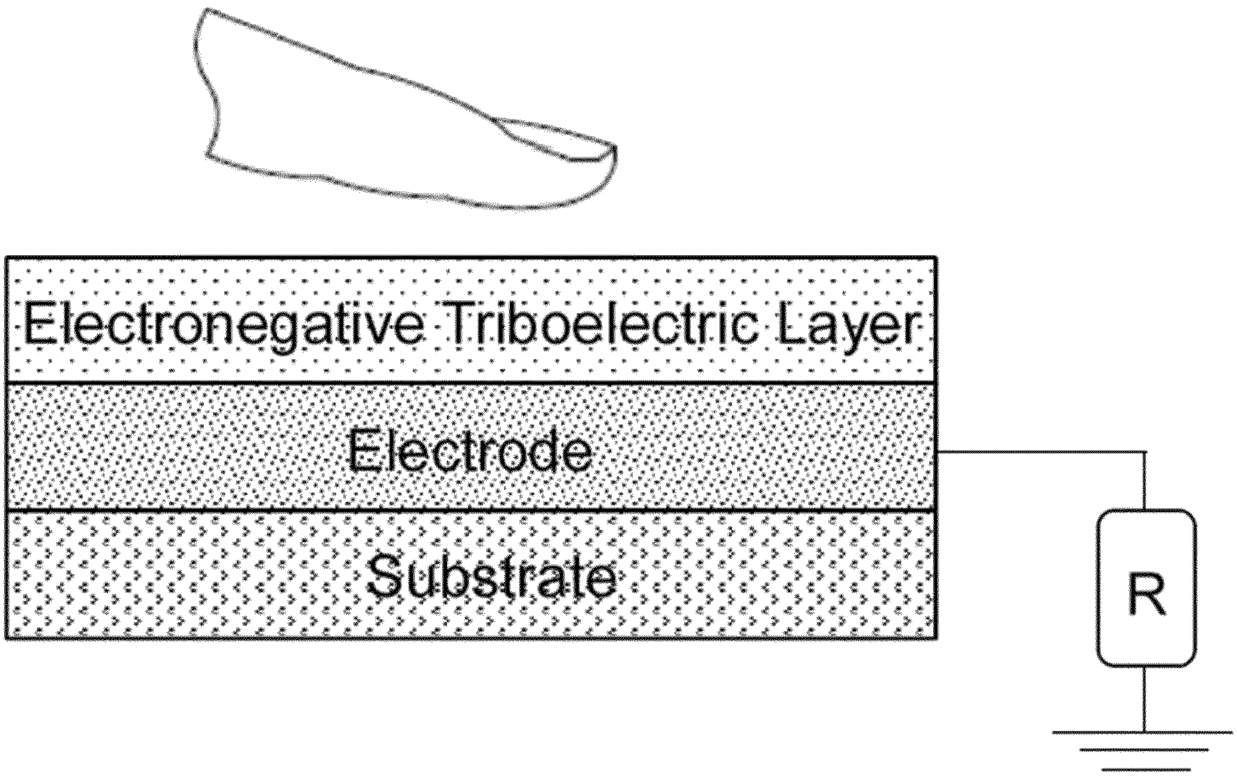
Electronegative Triboelectric Layer
Electrode
Substrate
R

FIG. 2

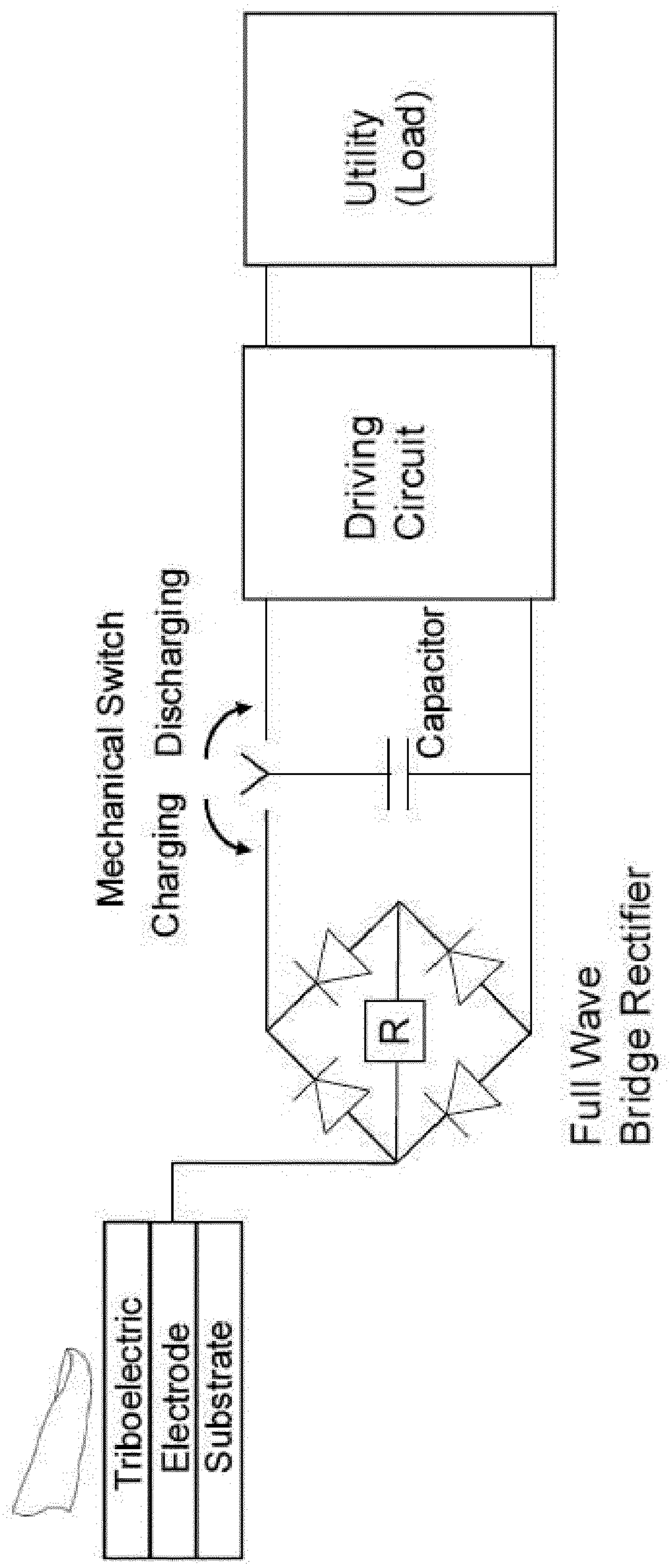
Utility
(Load)
Driving
Circuit
Mechanical Switch
Charging
Discharging
Capacitor
R
Full Wave
Bridge Rectifier
Triboelectric
Electrode
Substrate

FIG. 3

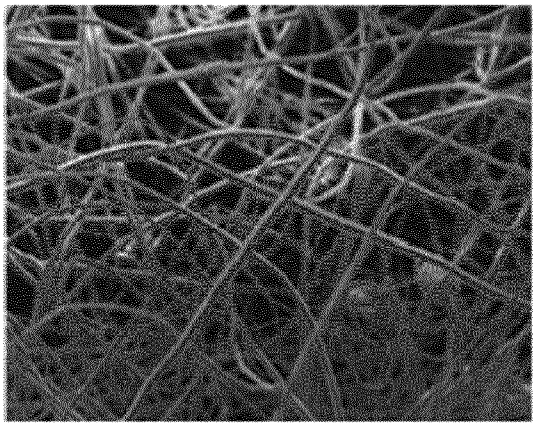

FIG. 4A

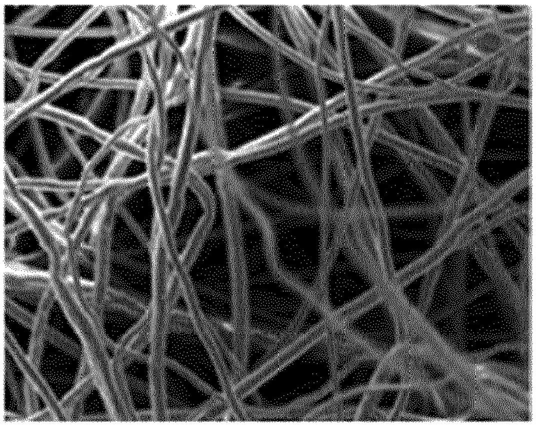

FIG. 4B

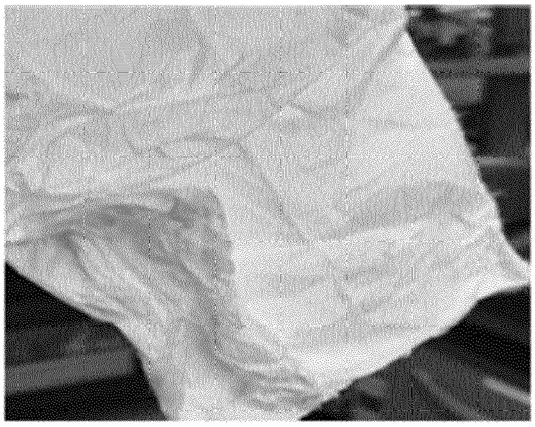

FIG. 4C

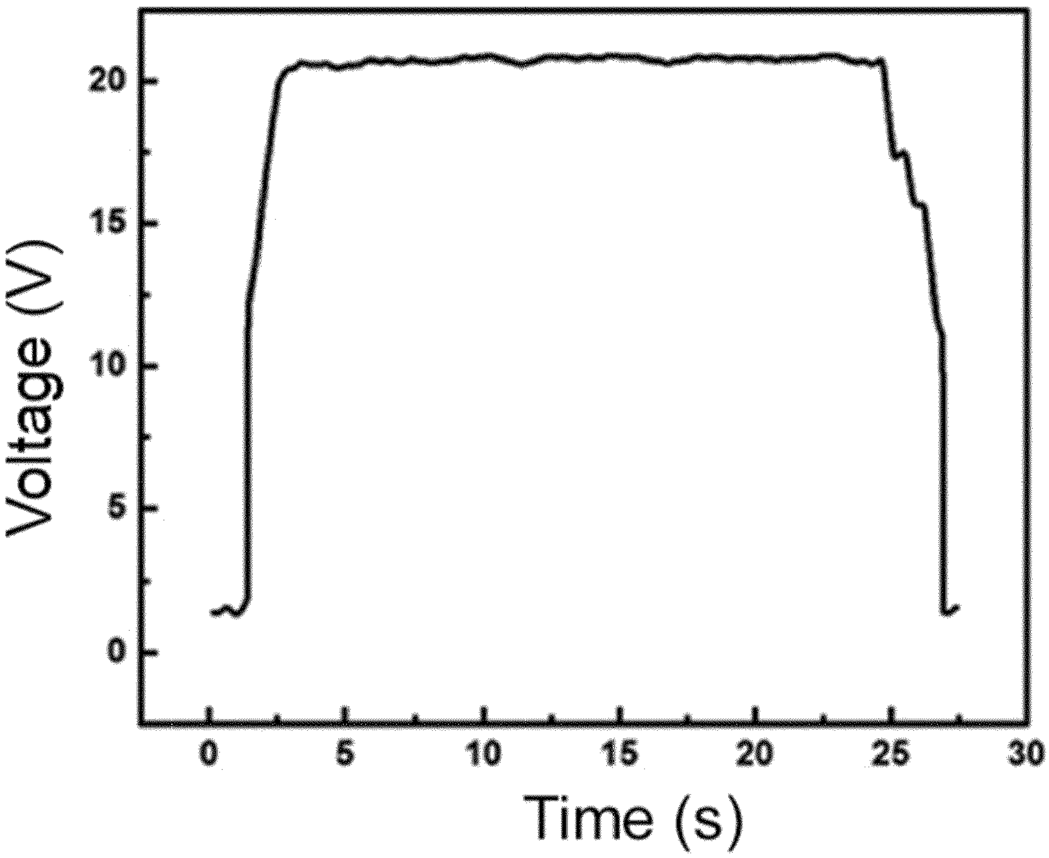


FIG. 5A

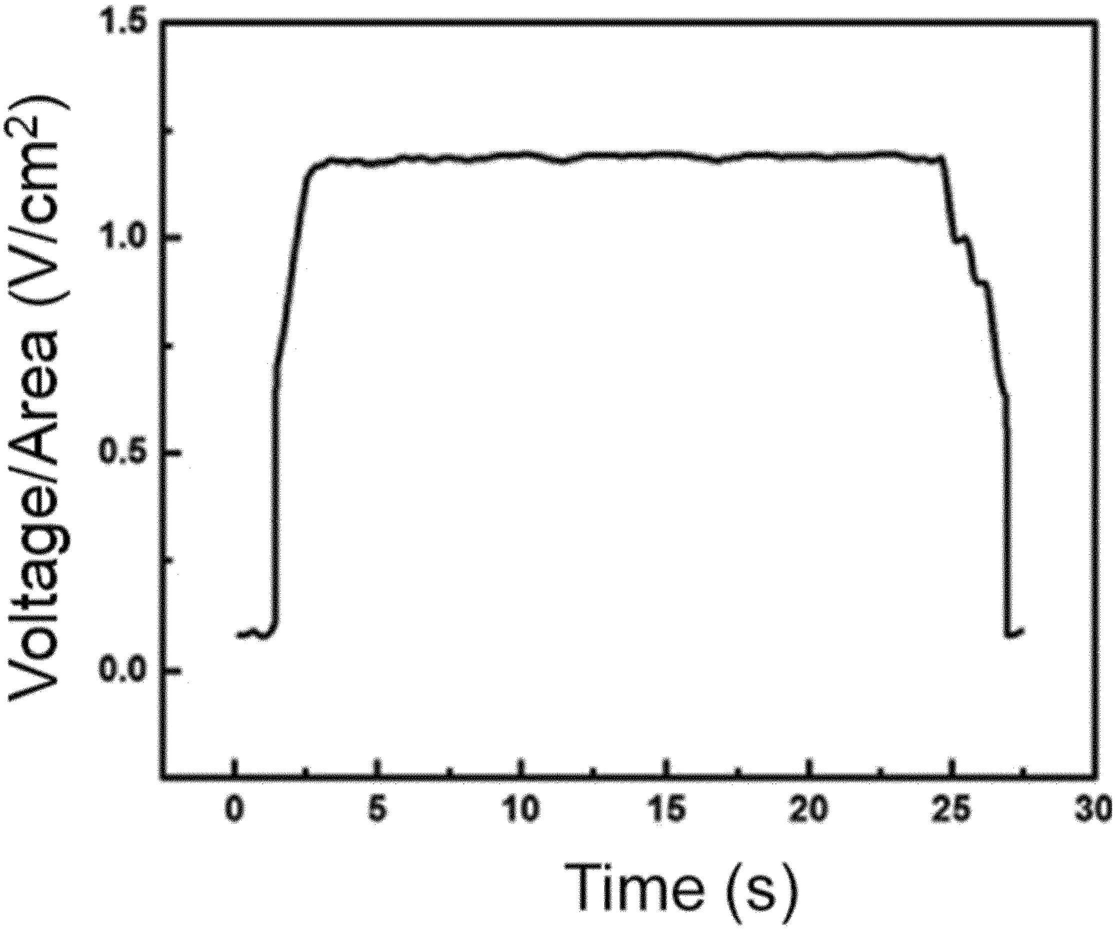


FIG. 5B

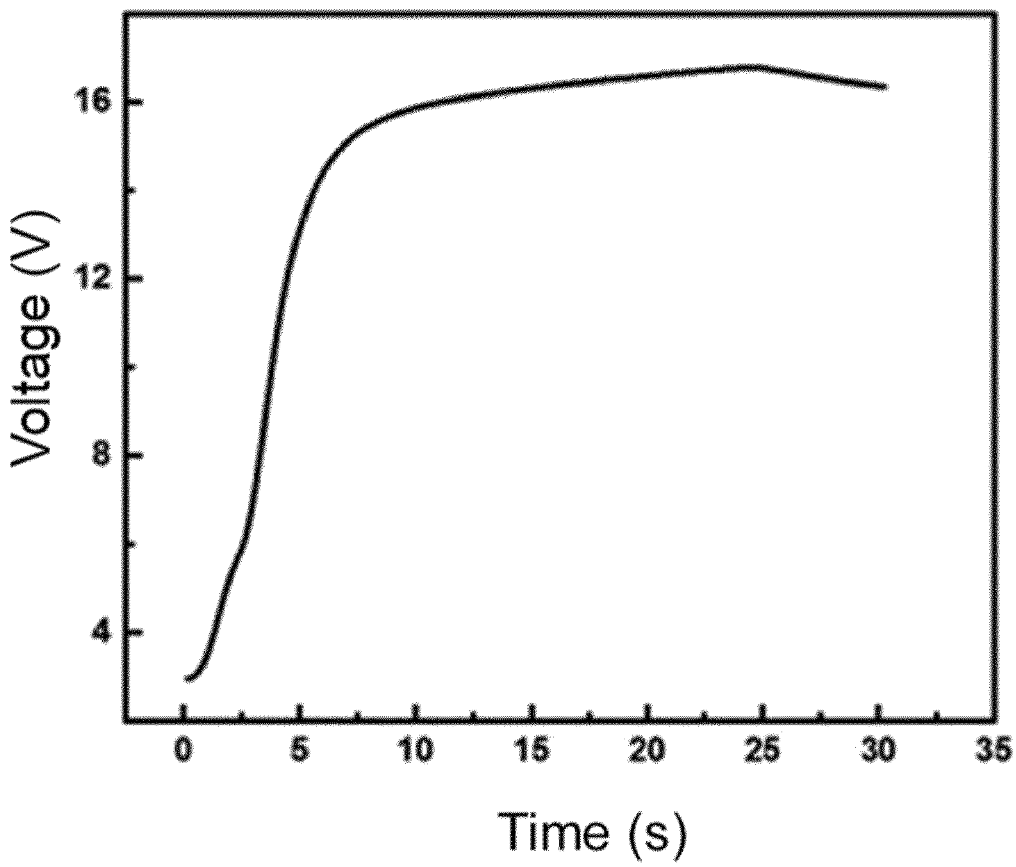


FIG. 6A

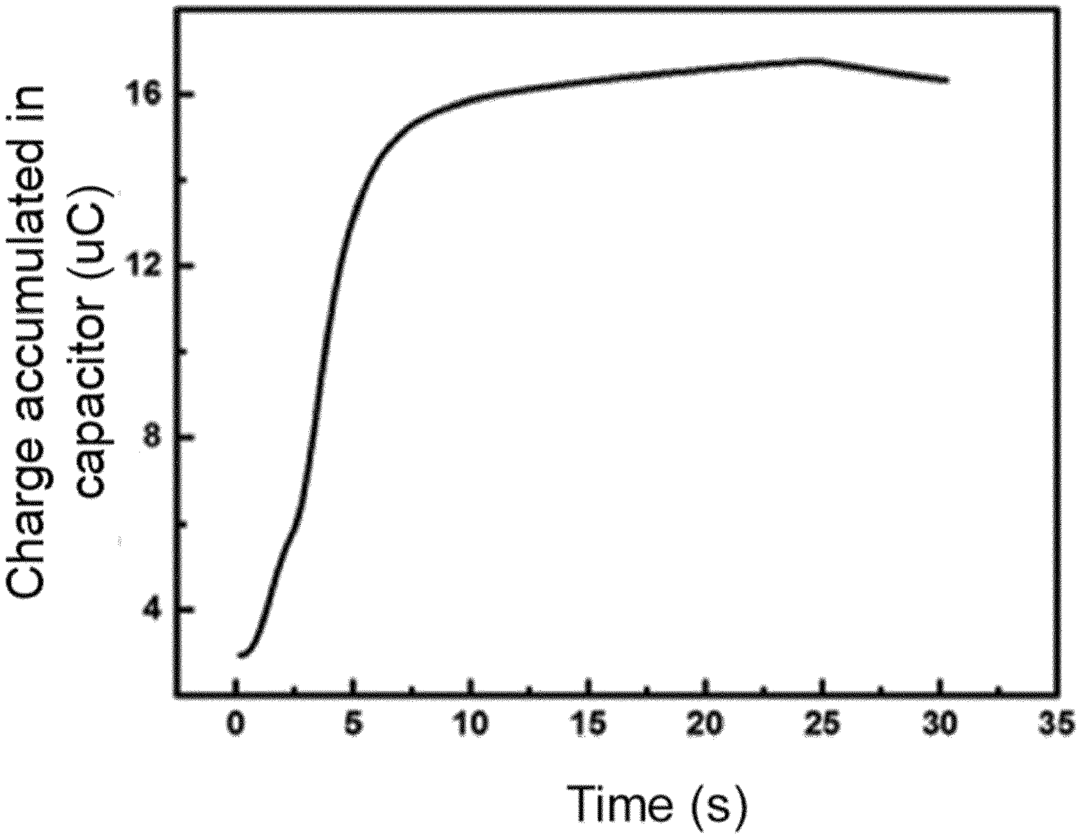
Charge accumulated in capacitor (uC)
16
12
8
4
0
5
10
15
20
25
30
35
Time (s)

FIG. 6B

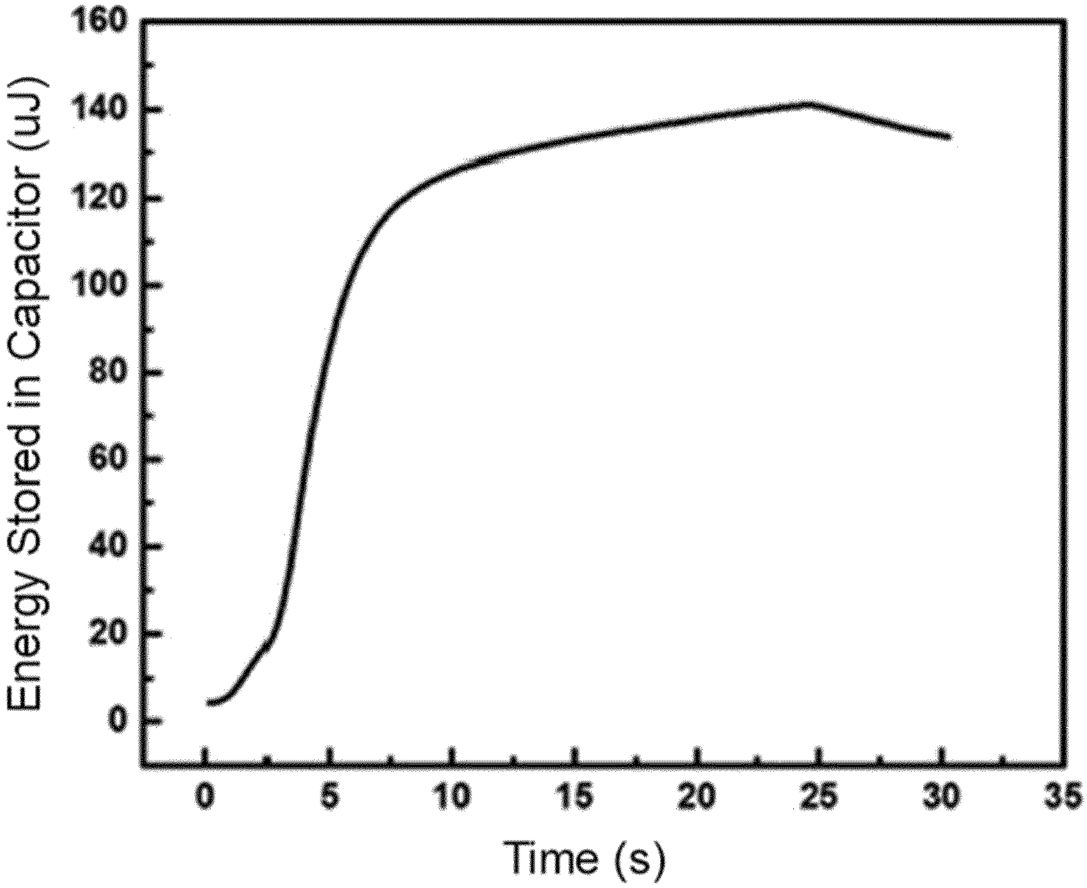
160
140
120
100
80
60
40
20
0
Energy Stored in Capacitor (uJ)
0
5
10
15
20
25
30
35
Time (s)

FIG. 7

Europäisches Patentamt
European Patent Office
Office européen des brevets

# EUROPEAN SEARCH REPORT

Application Number
EP 19 19 4543

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2018/226162 A1 (UNIV NANYANG TECH [SG]) 13 December 2018 (2018-12-13) * paragraphs [0155], [0156] * * figure 4a * | 1-15 | INV. H02N1/04 |
| T | YU CHUANYONG ET AL: "Marvelous abilities for polyhedral oligomeric silsesquioxane to improve tribological properties of polyamide-imide/polytetrafluoroethylene coatings", JOURNAL OF MATERIALS SCIENCE, KLUWER ACADEMIC PUBLISHERS, DORDRECHT, vol. 53, no. 17, 24 May 2018 (2018-05-24), pages 12616-12627, XP036525595, ISSN: 0022-2461, DOI: 10.1007/S10853-018-2475-1 [retrieved on 2018-05-24] * Paragraph "Conclusions" * | 1 | |
| | | | TECHNICAL FIELDS SEARCHED (IPC) |
| | | | H02N |

The present search report has been drawn up for all claims

| Place of search | Date of completion of the search | Examiner |
|---|---|---|
| Berlin | 20 February 2020 | Foussier, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

1

## ANNEX TO THE EUROPEAN SEARCH REPORT ON EUROPEAN PATENT APPLICATION NO.

EP 19 19 4543

This annex lists the patent family members relating to the patent documents cited in the above-mentioned European search report. The members are as contained in the European Patent Office EDP file on
The European Patent Office is in no way liable for these particulars which are merely given for the purpose of information.

20-02-2020

| Patent document cited in search report | Publication date | Patent family member(s) | Publication date |
|---|---|---|---|
| WO 2018226162 A1 | 13-12-2018 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20170247507 A